# EUROPÄISCHE PATENTANMELDUNG

(11) **EP 2 966 314 A1**
(43) Veröffentlichungstag der Anmeldung: **13.01.2016**
(21) Anmeldenummer: 15174112.1
(22) Anmeldetag: 26.06.2015
(51) Int. Cl.: F16F 15/131, F16H 55/12

(54) **SCHWUNGRAD EINES VERBRENNUNGSMOTORS MIT EINEM MEHRTEILIGEN ZAHNKRANZ, DER EIN MIT EINEM VERZAHNUNGSABSCHNITT VERSEHENES SEGMENT AUFWEIST**

(30) Priorität: 01.07.2014 DE 102014109189
(71) Anmelder: Linde Material Handling GmbH, 63743 Aschaffenburg (DE)
(72) Erfinder: Hanke, Mark, 63739 Aschaffenburg (DE); Ullrich, Manfred, 63776 Mömbris (DE); Krumbholz, Peter, 63869 Jakobsthal (DE)
(74) Vertreter: Geirhos, Johann

(57) **Zusammenfassung**

Die Erfindung betrifft ein Schwungrad (1) eines Verbrennungsmotors mit einem Zahnkranz (2), der zum Eingriff mit einem axial einspurenden Anlasserritzel eines Anlassermotors vorgesehen ist. Um eine erhöhte Lebensdauer zu erzielen, wird erfindungsgemäß vorgeschlagen, dass der Zahnkranz (2) mehrteilig ausgebildet ist und mindestens ein mit einem Verzahnungsabschnitt (3a) versehenes Segment (3) aufweist, das beim Stillsetzen des Verbrennungsmotors in einer sich nach dem Auspendeln ergebenden Vorzugslage des Schwungrads (1) dem Anlasserritzel axial gegenüberliegend angeordnet ist.

## Beschreibung

Die Erfindung betrifft ein Schwungrad eines Verbrennungsmotors mit einem Zahnkranz, der zum Eingriff mit einem axial einspurenden Anlasserritzel eines Anlassermotors vorgesehen ist.

In der DE 10 2012 019 189 A1 ist ein Zahnkranz für ein gattungsgemäßes Schwungrad beschrieben. Um eine hohe Verschleissfestigkeit der Verzahnung zu erzielen, ist diese gehärtet, während die innere Mantelfläche des Zahnkranzes durch einen geringeren Kohlenstoffgehalt im Hinblick auf eine gute Schweißbarkeit optimiert ist.

Ein solcher Zahnkranz ist für übliche Anwendungsfälle oder für Systeme, bei denen das Anlasserritzel ständig eingespurt bleibt und ein spezieller Freilauf vorgesehen ist, gut geeignet. Bei mobilen Arbeitsmaschinen hat der Verbrennungsmotor jedoch einen relativ großen Hubraum und ein dementsprechend hohes Anlassmoment. Ferner steht häufig der Verbrennungsmotor mit einer hydraulischen Pumpe in Antriebsverbindung steht, die zum Anlassen des Verbrennungsmotors mitgeschleppt werden muss. Kommt noch ein Start-Stopp-System hinzu, bei dem eine Vielzahl von zusätzlichen Einrückvorgängen des Anlasserritzels erfolgt, dann kann es verstärkt zu Verschleissproblemen kommen.

Der vorliegenden Erfindung liegt die Aufgabe zu Grunde, ein Schwungrad der eingangs genannten Art zur Verfügung zu stellen, bei dem eine erhöhte Lebensdauer erzielbar ist.

Diese Aufgabe wird erfindungsgemäß dadurch gelöst, dass der Zahnkranz mehrteilig ausgebildet ist und mindestens ein mit einem Verzahnungsabschnitt versehenes Segment aufweist, das beim Stillsetzen des Verbrennungsmotors in einer sich nach dem Auspendeln ergebenden Vorzugslage des Schwungrads dem Anlasserritzel axial gegenüberliegend angeordnet ist.

Der erfindungswesentliche Gedanke besteht demnach darin, in einer Position des Schwungrads, in der beim Einspuren des Anlasserritzels in die Verzahnung des Zahnkranzes die Beanspruchung am höchsten ist, ein mit einem Verzahnungsabschnitt versehenes Segment in den Zahnkranz einzusetzen, so dass der Verzahnungsabschnitt einen Bestandteil der Verzahnung des Zahnkranzes darstellt. Das ist in einem Umfangsbereich des Zahnkranzes der Fall, der beim Stillsetzen des Verbrennungsmotors nach dem Auspendeln des Schwungrads dem Anlasserritzel des Anlassermotors axial gegenüberliegt. Durch das Vorhandensein mindestens eines gesonderten Verzahnungssegments können in diesem Umfangsbereich des somit mehrteilig ausgeführten Zahnkranzes gezielt lebensdauererhöhende Maßnahmen ergriffen werden.

Je nach Ausbildung des Verbrennungsmotors kann es mehrere Vorzugslagen geben, in denen das Schwungrad auspendelt, und dementsprechend mehrere Umfangsbereiche des Zahnkranzes, die dem Anlasserritzel axial gegenüberliegen können. Bei einem Vierzylinder-Viertakt-Reihenmotor, dessen Schwungrad zwei um 180 Grad in Umfangsrichtung zueinander versetzte Vorzugslagen für den Stillstand hat, handelt es sich um zwei ebenfalls um 180 Grad zueinander versetzte Bereiche der Verzahnung, die beim Stillstand des Schwungrads dem Anlasserritzel axial gegenüberliegen. Bei einem Einzylindermotor gibt es hingegen nur eine Vorzugsposition des Schwungrads für den Stillstand und dementsprechend auch nur einen Bereich der Verzahnung des Zahnkranzes, der regelmäßig beim Stillstand des Schwungrads dem Anlasserritzel axial gegenüberliegt.

Als lebensdauererhöhende Maßnahme kommt im einfachsten Fall eine vorteilhafte Ausgestaltung der Erfindung in Betracht, gemäß der das Segment lösbar in den Zahnkranz eingesetzt ist, um es bei Verschleiss des Verzahnungsabschnitts austauschen zu können. Zur Befestigung des Segments kommen dabei schraub- oder Klemmverbindungen in Frage oder gleichwertige formschlüssige Verbindungen. Das Segment kann die gleichen oder ähnliche Eigenschaften wie der Rest des Zahnkranzes haben, dient jedoch als Verschleissteil, das zu gegebener Zeit vom Zahnkranz gelöst und gegen ein Neues ausgetauscht wird. Es ist somit nicht erforderlich, den gesamten Zahnkranz vom Schwungrad zu entfernen und durch einen Neuen zu ersetzen. Vielmehr genügt der Ersatz eines relativ kleinen, preiswerten Bauteils, nämlich des Segments, um das Schwungrad wieder in einen funktionssicheren Zustand zu bringen.

Es versteht sich, dass es zum Austausch des Segments sinnvoll ist, den dazu erforderlichen Aufwand gering zu halten. Zweckmäßigerweise kann deshalb in dem das Schwungrad umgebende Bauteil, beispielsweise einer Getriebeglocke, einem Zwischenflansch etc., mindestens ein Fenster vorgesehen sein, durch das - ggf. nach entsprechendem Verdrehen des Schwungrads - das Segment zugänglich ist und ausgetauscht werden kann. Es ist somit nicht erforderlich, den Antriebsstrang zu zerlegen.

Zusätzlich oder alternativ zu einem Austausch des Segments ist es auch möglich, dass der Verzahnungsabschnitt des Segments verschleissfester als die benachbarte Verzahnung des Zahnkranzes ausgebildet ist. Das kann z.B. durch eine spezielle Geometrie der Verzahnung geschehen, die das Einspuren des Anlasserritzels erleichtert, beispielsweise Fasen, Verrundungen usw., also Formgestaltungen, die das Einfädeln von Zähnen des Anlasserritzels in die Lücken im Verzahnungsabschnitt des Segments bzw. die Gleiteigenschaften beim axialen Aufschieben des Anlasserritzels auf den Verzahnungsabschnitt des Segments verbessern.

In Weiterbildung der Erfindung erweist es sich als günstig, wenn zumindest der Verzahnungsabschnitt des Segments aus einem verschleissfesteren Material besteht als die benachbarte Verzahnung des Zahnkranzes. Dadurch kann der Zahnkranz weitgehend für geringe Belastungen ausgelegt werden, was eine einfache Fertigung ermöglicht. Durch eine im Hinblick auf Verschleissfestigkeit günstige Materialpaarung im Bereich des Verzahnungsabschnitts des gesonderten Segments, lässt sich dennoch eine Lebensdauer erzielen, die signifikant über das bisher erzielbare Maß hinausgeht.

Hierbei ist es möglich, den Verzahnungsabschnitt des Segments oder das ganze Segment härter, zäher und damit allgemein widerstandsfähiger auszuführen. Es können die Gleiteigenschaften zwischen Anlasserritzel und dem Verzahnungsabschnitt des Segments verbessert werden, beispielsweise durch andere Werkstoffe als der Rest des Zahnkranzes oder andere Herstellungsverfahren. Vorzugsweise können einsatzgehärtete oder gasnitrierte Stähle, Hartmetalle, keramische Segmente oder aus Grundmaterial und Beschichtung bestehende Verbundwerkstoffe zur Verwendung kommen.

Bei einer hoch verschleissfesten Ausführung des Verzahnungsabschnitts des Segments ist es unter Umständen möglich, auf die lösbare Befestigung des Segments zu verzichten. Es können dann unlösbare Verbindungen in Betracht gezogen werden, beispielsweise Kleben, Nieten, Löten, Schweissen oder sonstige stoffschlüssige Verbindungen.

In weiterer Ausgestaltung der Erfindung wird vorgeschlagen, dass sich das Segment über die volle Breite des Zahnkranzes erstreckt.

Hierbei kann das Segment in einer radialen Tasche des Zahnkranzes angeordnet sein. Es ist dann möglich, den Zahnkranz auf die übliche Weise mit dem Schwungrad zu verbinden, beispielsweise durch Aufschrumpfen. Es bedarf somit keines Ausbaus des Zahnkranzes, um das Segment auszutauschen.

Nicht minder günstig ist eine Ausbildung der Erfindung, gemäß der das Segment in eine axiale Tasche des Zahnkranzes eingesetzt ist. Hierbei ist es möglich, dass der Verzahnungsabschnitt nur einen Teil der Zahnkranzbreite einnimmt. Wesentlich ist aber, dass es sich gerade um den am höchsten belasteteten Teil des Zahnkranzes handelt und somit die angestrebte Wirkung erzielbar ist, d.h. eine erhöhte Lebensdauer des Schwungrades bzw. des Gesamtsystems. Auch hier kann der Zahnkranz an Ort und Stelle bleiben, wenn das Segment ausgetauscht wird.

Schließlich erweist sich auch eine Ausgestaltung der Erfindung als vorteilhaft, bei der der Zahnkranz aus einer Mehrzahl von Segmenten zusammengesetzt ist. Durch die zu einem Zahnkranz zusammenfügbaren Segmente wird gegenüber einem vollständigen Zahnkranz mit Aussparungen für Segmente kleinerer Abmessungen die Handhabung im Fertigungsprozess vereinfacht. So können z.B. beim Härten kleinere Induktorspulen verwendet werden, was einer Verringerung von Werkzeugkosten gleichkommt.

In vorteilhafter Weiterbildung wird vorgeschlagen, dass der Zahnkranz aus einer Mehrzahl von geometrisch gleichen Segmenten zusammengesetzt ist. Die Konstruktion von Gleichteilen verringert den Fertigungsaufwand und führt damit zu einer Kostenersparnis. Es werden maximal zwei Sorten von Segmenten benötigt, nämlich verschleissfest ausgeführte Segmente und die Standard-Segmente. Alternativ können auch nur Standard-Segmente eingesetzt werden, wobei - wie bereits erläutert - die bei Stillstand des Verbrennungsmotors dem Anlasserritzel gegenüberliegenden Segmente bei Bedarf austauschbar sind.

Die Segmente, aus denen der Zahnkranz zusammengesetzt ist, können in einer Ausgestaltung der Erfindung jeweils mit dem Schwungrad verbunden sein. Der Zahnkranz wird somit durch die Befestigung der Segmente am Schwungrad gebildet.

Das erfindungsgemäße Schwungrad ermöglicht eine Verwendung des bewährten Anlasser-Zahnkranz-Systems auch bei Verbrennungsmotoren, die mit Start-Stopp-Anlagen ausgerüstet sind und ist mit den Systemen des Standes der Technik austauschbar.

Weitere Vorteile und Einzelheiten der Erfindung werden anhand der in den schematischen Figuren dargestellten Ausführungsbeispiele näher erläutert. Dabei zeigt
- Figur 1: eine Seitenansicht eines erfindungsgemäßen Schwungrads,
- Figur 2: einen Schnitt durch das Schwungrad gemäß Figur 1,
- Figur 3: eine perspektivische Absicht des Schwungrads gemäß Figur 1,
- Figur 4: eine Variante eines erfindungsgemäßen Schwungrads und
- Figur 5: eine zweite Variante des erfindungsgemäßen Schwungrads mit einem Teilschnitt.

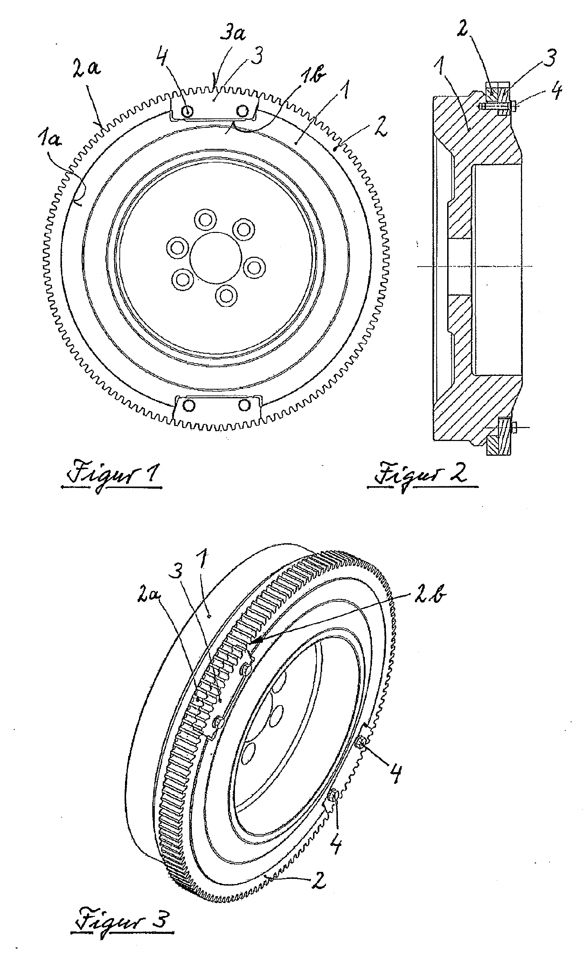

Das in den Figuren 1 bis 3 dargestellte Schwungrad 1 eines Verbrennungsmotors ist mit einem Zahnkranz 2 versehen, der eine Verzahnung 2a aufweist und auf einem dafür vorgesehenen Durchmesserabsatz 1 a des Schwungrads 1 aufgeschrumpft oder auf andere geeignete Weise mit dem Schwungrad 1 verbunden ist. Zum Starten des Verbrennungsmotors wird ein in den Figuren nicht dargestelltes Anlasserritzel eines Anlassermotors in den Zahnkranz 2 bzw. dessen Verzahnung 2a axial eingespurt.

Das Schwungrad 1 ist im vorliegenden Ausführungsbeispiel zur drehstarren Befestigung an der Kurbelwelle eines als Vierzylinder-Viertakt-Reihenmotor ausgeführten Verbrennungsmotors vorgesehen. Ein solcher Verbrennungsmotor hat - bedingt durch den Versatz der Kurbelzapfen der Kurbelwelle und durch die sich ergebenden Kompressionshübe der Kolben - beim Stillsetzen zwei um 180 Grad in Umfangsrichtung zueinander versetzte Vorzugslagen, in denen sich das Schwungrad 1 auspendelt.

Im ausgependelten Zustand des Schwungrades 1 befinden sich daher in der Regel immer jeweils eine von zwei, um 180 Grad in Umfangsrichtung zueinander versetzte Bereiche des Zahnkranzes 2 dem relativ dazu ortsfesten Anlassermotor bzw. dessen einspurendem Anlasserritzel axial gegenüber. In diesen zwei möglichen, dem Anlasserritzel axial gegenüberliegenden Bereichen des Schwungrades 1 ist der Zahnkranz 2 jeweils mit einem gesonderten Segment 3 versehen. Der Zahnkranz 2 ist somit mehrteilig ausgebildet.

Das Segment 3 ist in eine stirnseitige axiale Tasche 2b des Zahnkranzes 2 eingesetzt und erstreckt sich nach radial innen in eine Aussparung 1 b des Schwungrades 1 hinein. Im Bereich dieser Aussparung 1 b ist das Segment 3 mittels Schraubverbindungen am Schwungrad 1 befestigt und damit mit dem Zahnkranz 2 verbunden, im vorliegenden Ausführungsbeispiel über zwei Schrauben 4, die in axiale Gewindebohrungen des Schwungrads 1 eingeschraubt sind. Selbstverständlich ist auch eine Ausführung möglich, bei der das Segment 3 ausschließlich im Bereich des Zahnkranzes 2 montiert und somit keine radiale Erstreckung in eine Aussparung 1 b des Schwungrads 1 hinein vorgesehen ist.

Das Segment 3 weist an seinem Außendurchmesser einen Verzahnungsabschnitt 3a auf, der zu der an die axiale Tasche 2b anschließenden Verzahnung 2a des Zahnkranzes 2 fluchtet. Mithin stellt der Verzahnungsabschnitt 3a des Segments 3 im montierten Zustand einen Teil des Zahnkranzes 2 dar und vervollständigt dessen Verzahnung 2a. Es sind auch (nicht gezeigte) Ausführungen möglich, bei denen sich der Verzahnungsabschnitt 3a über die volle Breite des Zahnkranzes 2 erstreckt. Die Befestigung des Segments 3 kann dabei wie dargestellt erfolgen, also mit Hilfe einer axialen Tasche 2b des Zahnkranzes 2. Auch eine radiale Tasche des Zahnkranzes 2, in die ein nach radial innen gerichteter Fortsatz des Segments 3 eintaucht, ist möglich.

Es versteht sich, dass zur exakten Positionierung des Verzahnungsabschnitts 3a des Segments 3 relativ zur restlichen Verzahnung 2a des Zahnkranzes 2 Stifte oder Passflächen vorgesehen sein können. Auch eine Ausrichtung ausschließlich während der Montage - mit Hilfe eines geeigneten Montagewerkzeugs - ist möglich, wobei dann nach der Montage die Einhaltung der exakten Positionierung nicht über Formschluss sondern nur über Reibschluss erfolgt.

Durch die lösbare Befestigung des Segments 3 kann dieses gleiche oder ähnliche Eigenschaften wie der Rest des Zahnkranzes 2 haben. Bei Verschleiss kann es gegen ein Neuteil ausgetauscht werden. Ein Austausch des kompletten Zahnkranzes 2 ist daher nicht erforderlich.

Es ist jedoch auch möglich, den Verzahnungsabschnitt 3a des Segments 3 verschleissfester als die benachbarte Verzahnung 2a des Zahnkranzes 2 auszubilden, z.B. durch eine spezielle, das Einspuren des Anlasserritzels erleichternde Geometrie der Verzahnung (Fasen, Verrundungen, sonstige Formgestaltungen, die das Einfädeln von Zähnen des Anlasserritzels in die Lücken im Verzahnungsabschnitt 3a des Segments 3 bzw. die Gleiteigenschaften beim axialen Aufschieben des Anlasserritzels auf den Verzahnungsabschnitt 3a des Segments 3 verbessern) und/oder durch ein verschleissfesteres Material des Verzahnungsabschnitt 3a des Segments 3 oder des vollständigen Segments 3.

Der Zahnkranz 2 kann für geringere Belastungen ausgelegt werden, wodurch Vorteile in der Fertigung erzielbar sind. Durch die im Vergleich zum Zahnkranz 2 widerstandsfähigere Ausführung des Verzahnungsabschnitts 3a des Segments 3 oder des ganzen Segments 3 ist es möglich, dennoch den Verschleiss gering zu halten. Bei einer solchen, hoch verschleissfesten Ausführung des Verzahnungsabschnitts 3a kann auf eine lösbare Befestigung des Segments 3 verzichtet werden und es sind unlösbare Verbindungen verwendbar, z.B. Klebe-, Niet-, Löt-, Schweissverbindungen oder sonstige stoffschlüssige Verbindungen.

Der Verzahnungsabschnitt 3a des Segments 3 kann - wie dargestellt - in Umfangsrichtung so lang sein, dass mehrere Zähne umfasst sind. Es ist auch eine kürzere Bauweise möglich, beispielsweise mit einer Umfangslänge des Segments 3, die nur einer Zahnlänge entspricht, so dass gewissermaßen ein Einzelzahnsegment gebildet ist. In diesem Fall können mehrere Einzelzahnsegmente in Umfangsrichtung nacheinander angeordnet werden. Es ist ferner denkbar, eine noch kürzere Bauweise vorzusehen, bei der der Verzahnungsabschnitt 3a des Segments 3 in Umfangsrichtung kürzer als eine Zahnlänge ist, wobei dann ein Zahn aus mehreren Elementen zusammengesetzt wird und unterschiedliche Anforderungen auf der angetriebenen und der dazu entgegengesetzten Seite des Zahns berücksichtigt werden können.

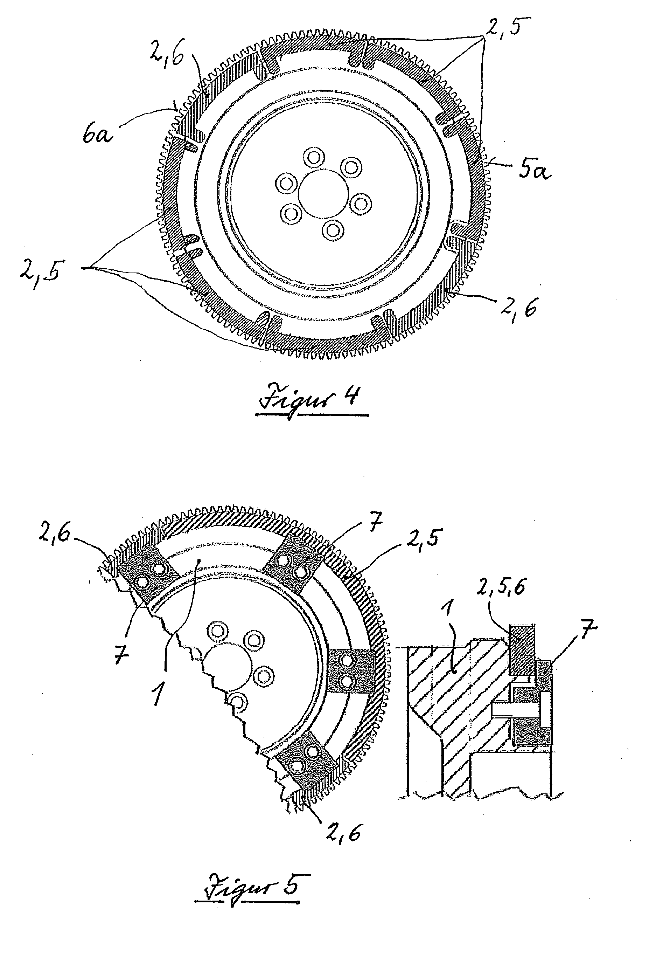

Bei der in Figur 4 gezeigten Variante des Schwungrads 1 ist der Zahnkranz 2 aus einer Mehrzahl von geometrisch gleichen Segmenten 5, 6 zusammengesetzt (im vorliegenden Ausführungsbeispiel acht Segmente), von denen sich die beiden Segmente 6 in den Umfangsbereichen befinden, die sich nach dem Auspendeln des Schwungrads 1 beim Stillsetzen des Verbrennungsmotors dem Anlasserritzel axial gegenüberliegend befinden können. Der Zahnkranz 2 wird von den aneinandergereihten Segmenten 5, 6 gebildet, die jeweils direkt mit dem Schwungrad 1 verbunden sind, beispielsweise daran festgeschraubt. Der Zahnkranz 2 entsteht dabei durch die Befestigung der Segmente 5, 6 am Schwungrad 1.

Analog zu den beiden im Zusammenhang mit dem Ausführungsbeispiel gemäß den Figuren 1 bis 3 bereits erläuterten Möglichkeiten können die beiden Segmente 6 ausgetauscht werden und/oder einen gegenüber der Verzahnung 5a der Segmente 5 verschleissfesteren Verzahnungsabschnitt 6a haben.

Bei der Variante des Schwungrads 1 gemäß Figur 5 sind zwei größere Segmente 5 und zwei kleinere Segmente 6 vorgesehen, die jeweils durch angeschraubte Klemmstücke 7 am Schwungrad 1 festgelegt sind.

## Patentansprüche

1. Schwungrad (1) eines Verbrennungsmotors mit einem Zahnkranz (2), der zum Eingriff mit einem axial einspurenden Anlasserritzel eines Anlassermotors vorgesehen ist, **dadurch gekennzeichnet, dass** der Zahnkranz (2) mehrteilig ausgebildet ist und mindestens ein mit einem Verzahnungsabschnitt (3a) versehenes Segment (3) aufweist, das beim Stillsetzen des Verbrennungsmotors in einer sich nach dem Auspendeln ergebenden Vorzugslage des Schwungrads (1) dem Anlasserritzel axial gegenüberliegend angeordnet ist.

2. Schwungrad nach Anspruch 1, **dadurch gekennzeichnet, dass** das Segment (3) lösbar in den Zahnkranz (2) eingesetzt ist.

3. Schwungrad nach Anspruch 1 oder 2, **dadurch gekennzeichnet, dass** der Verzahnungsabschnitt (3a) des Segments (3) verschleissfester als die benachbarte Verzahnung (2a) des Zahnkranzes (2) ausgebildet ist.

4. Schwungrad nach Anspruch 3, **dadurch gekennzeichnet, dass** zumindest der Verzahnungsabschnitt (3a) des Segments (3) aus einem verschleissfesteren Material besteht als die benachbarte Verzahnung (2a) des Zahnkranzes (2).

5. Schwungrad nach einem der Ansprüche 1 bis 4, **dadurch gekennzeichnet, dass** sich das Segment (3 bzw. 5, 6) über die volle Breite des Zahnkranzes (2) erstreckt.

6. Schwungrad nach einem der Ansprüche 1 bis 5, **dadurch gekennzeichnet, dass** das Segment (3) in einer radialen Tasche des Zahnkranzes (2) angeordnet ist.

7. Schwungrad nach einem der Ansprüche 1 bis 5, **dadurch gekennzeichnet, dass** das Segment (3) in eine axiale Tasche (2b) des Zahnkranzes (2) eingesetzt ist.

8. Schwungrad nach Anspruch 5, **dadurch gekennzeichnet, dass** der Zahnkranz (2) aus einer Mehrzahl von Segmenten (5, 6) zusammengesetzt ist.

9. Schwungrad nach Anspruch 8, **dadurch gekennzeichnet, dass** der Zahnkranz (2) aus einer Mehrzahl von geometrisch gleichen Segmenten (5, 6) zusammengesetzt ist.

10. Schwungrad nach Anspruch 8 oder 9, **dadurch gekennzeichnet, dass** die Segmente (5, 6), aus denen der Zahnkranz (2) zusammengesetzt ist, jeweils mit dem Schwungrad (1) verbunden sind.
